# EUROPÄISCHE PATENTSCHRIFT

(11) **EP 3 073 718 B1**
(45) Veröffentlichungstag und Bekanntmachung des Hinweises auf die Patenterteilung: **30.01.2019**
(21) Anmeldenummer: 16158694.6
(22) Anmeldetag: 04.03.2016
(51) Int. Cl.: H04W 4/18, H04M 3/00, H04W 8/18, H04M 1/725

(54) **VERFAHREN ZUR INDIVIDUELLEN PRÄDIKTION DER NUTZUNG UND/ODER DER INDIVIDUELLEN ANPASSUNG DER NUTZUNG EINES ZUR BEDIENUNG DURCH EINEN BENUTZER VORGESEHENEN PERSONALISIERTEN TELEKOMMUNIKATIONSENDGERÄTS, TELEKOMMUNIKATIONSENDGERÄT, COMPUTERPROGRAMM UND COMPUTERPROGRAMMPRODUKT**
METHOD FOR THE INDIVIDUAL PREDICTION OF THE USE AND/OR CUSTOMISATION OF THE USE OF A PERSONALIZED TELECOMMUNICATION TERMINAL TO BE OPERATED BY A USER, TELECOMMUNICATION TERMINAL, COMPUTER PROGRAM AND A COMPUTER PROGRAM PRODUCT
PROCEDE DESTINE A LA PREDICTION INDIVIDUELLE DE L'UTILISATION ET/OU DE L'ADAPTATION INDIVIDUELLE DE L'UTILISATION D'UN APPAREIL EMETTEUR DE TELECOMMUNICATION PERSONNALISE PAR UN UTILISATEUR, APPAREIL EMETTEUR DE TELECOMMUNICATION, PROGRAMME INFORMATIQUE ET PRODUIT-PROGRAMME INFORMATIQUE

(30) Priorität: 27.03.2015 DE 102015205661
(43) Veröffentlichungstag der Anmeldung: 28.09.2016
(73) Patentinhaber: Deutsche Telekom AG, 53113 Bonn (DE)
(72) Erfinder: Spanknebel, Frank R., 64521 Groß-Gerau (DE); Stepanek, Nicolas Walter, 64385 Reichelsheim (DE)
(74) Vertreter: Schwöbel, Thilo K.

(56) Entgegenhaltungen:
- US-A1- 2008 091 722
- US-A1- 2010 105 374
- US-A1- 2014 206 328

## Beschreibung

### Stand der Technik

Die Erfindung betrifft ein Verfahren zur individuellen Prädiktion der Nutzung und/oder der individuellen Anpassung der Nutzung eines zur Bedienung durch einen Benutzer vorgesehenen personalisierten Telekommunikationsendgeräts.

Die Erfindung betrifft ferner auch ein Telekommunikationsendgerät zur individuellen Prädiktion der Nutzung und/oder der individuellen Anpassung der Nutzung durch einen Benutzer.

Ferner betrifft die Erfindung auch ein Computerprogramm mit Programmcodemitteln und ein Computerprogrammprodukt.

Ein Verfahren zur automatischen Änderung eines Anrufempfangsmodus in einem mobilen Endgerät ist aus der Schrift US 2010 / 0105374 A1 bekannt. Die Nutzung von hochpersonalisierten Endgeräten (bzw. Telekommunikationsendgeräten) in allen nur denkbaren Alltagssituationen und die Zuführung vielfältigster Informationen über diese Endgeräte ist ein unaufhaltsamer Trend. Neben den vielen Vorteilen für den Kunden bzw. den Benutzer solcher Telekommunikationsendgeräte ergeben sich daraus aber gleichzeitig eine Reihe von neuen Problemen, die es im Sinne des Anwenders bzw. Benutzers zu lösen gilt.

Der Anwender bzw. Benutzer wünscht sich Vereinfachung. Der Erfindung liegt die Fragestellung zugrunde, auf welchem Weg die Anbieter von personalisierten Endgeräten, insbesondere Betreiber von Telekommunikationsnetzen, eine Unterstützung bei der Priorisierung, Ausspielung oder Kenntlichmachung von Informationen aus den verschiedensten Kommunikationskanälen - beispielsweise herkömmliche Telefonanrufe und/oder Nachrichten, beispielsweise Kurznachrichten oder dergleichen, oder aber auch Nachrichten aus sozialen Netzwerken bzw. die über andere Kanäle generiert werden, beispielsweise durch Dienste wie Facebook, Twitter, Whatsapp oder dergleichen - möglich machen können.

### Offenbarung der Erfindung

Der Erfindung liegt die Aufgabe zugrunde, ein Verfahren und ein Telekommunikationsendgerät zur individuellen Prädiktion der Nutzung und/oder der individuellen Anpassung der Nutzung eines zur Bedienung durch einen Benutzer vorgesehenen personalisierten Telekommunikationsendgeräts anzugeben, wobei das Telekommunikationsendgerät eine Benutzerschnittstelle aufweist, wobei das Telekommunikationsendgerät ein Verhaltensdetektionselement aufweist, wobei mittels des Verhaltensdetektionselements zum einen mittels der Benutzerschnittstelle vorgenommene Benutzungshandlungen des Benutzers und zum anderen Kontextinformationen des Telekommunikationsendgeräts detektiert werden, so dass es möglich ist, die Benutzung bzw. die Benutzbarkeit und die individuelle Anpassung des Telekommunikationsendgeräts an die individuellen Bedürfnisse des Nutzers bzw. Benutzers besser und in einer für den Benutzer einfacher durchführbaren bzw. konfigurierbaren Weise zu realisieren und damit unerwünschte Situationen bei der Interaktion des Telekommunikationsendgeräts mit dem Benutzer zu vermeiden - d.h. insbesondere Situationen, in denen ein Benutzer des Telekommunikationsendgeräts durch eingehende bzw. erzeugte und dem Benutzer durch das Telekommunikationsendgerät auch signalisierte Nachrichten bzw. Informationen sich durch insbesondere die Signalisierung der eingehenden oder generierten Nachrichten oder Informationen belästigt oder gestört fühlt, oder auch Situationen, in denen ebenfalls eine Störung oder Belästigung des Benutzers des Telekommunikationsendgeräts erfolgt oder vorliegt, jedoch dadurch ausgelöst werden, dass eingehende, eingegangene oder aber durch das Telekommunikationsendgerät erzeugte Nachrichten oder Informationen dem Benutzer durch das Telekommunikationsendgerät nicht oder nicht in ausreichender (d.h. für den Benutzer erkennbarer) Weise signalisiert werden.

Diese Aufgabe wird erfindungsgemäß gelöst durch ein Verfahren gemäß Anspruch 1 und durch ein Telekommunikationsendgerät gemäß Anspruch 8.

Es ist hierdurch gemäß der vorliegenden Erfindung in vorteilhafter Weise möglich, dass ein Mehrwert für den Kunden bzw. den Benutzer durch die erfindungsgemäße Nutzung des Telekommunikationsendgeräts bzw. durch die Einrichtung des Telekommunikationsendgeräts zur erfindungsgemäßen Nutzung generiert wird. Ferner ist es erfindungsgemäß vorteilhaft möglich, dass die Einfachheit bei der Benutzung des Telekommunikationsendgeräts erhöht wird und dennoch ein maximales Maß an Privatsphäre sichergestellt wird.

Dabei besteht das größte Problem darin, zu erkennen, welche Notifikationen, Informationen im jeweiligen Zeitpunkt für den Kunden bzw. den Benutzer des Telekommunikationsendgeräts die höchste Relevanz haben.

Erfindungsgemäß ist es in vorteilhafter Weise vorgesehen, dass unter anderem der Kontext der Nutzung des Telekommunikationsendgeräts (bzw. der Endgerätenutzung) und/oder der Absender der Nachricht bzw. der Information (bzw. sonstige Metadaten der eingegangenen bzw. generierten Nachricht bzw. der Information) und/oder der jeweilige Inhalt der Nachricht bzw. der Information bewertet wird. Besonders bevorzugt ist es erfindungsgemäß, wenn sowohl der Kontext der Nutzung des Telekommunikationsendgeräts als auch der Absender der Nachricht bzw. der Information (bzw. sonstige Metadaten der eingegangenen bzw. generierten Nachricht bzw. der Information) als auch der jeweilige Inhalt der Nachricht bzw. der Information bewertet werden.

Im Rahmen der vorliegenden Erfindung wird des Öfteren auf den Begriff eines bzw. des Benutzers oder auf den Begriff eines bzw. des Nutzers des Telekommunikationsendgeräts Bezug genommen. Hierbei sind diese Begriffe nicht einschränkend im Sinne eines bestimmten biologischen Geschlechts des Nutzers oder Benutzers zu verstehend, sondern selbstredend ebenfalls im Sinne einer Nutzerin bzw. einer Benutzerin des Telekommunikationsendgeräts zu verstehen.

Durch die Nutzung mobiler Endgeräte bzw. von Telekommunikationsendgeräten durch den jeweiligen Benutzer entsteht typischerweise eine lokale, persistierte, sowie eng auf das jeweilige Endgerät bzw. Telekommunikationsendgerät bezogene persönliche Relevanz bzw. Relevanzinformation (bzw. ein Relevanzwert) für bestimmte durch das Telekommunikationsendgerät empfangene oder aber auch generierte Nachrichten bzw. Informationen. Eine solche persönliche Relevanz (bzw. eine solche persönliche Relevanzinformation bzw. ein solcher Relevanzwert) kann als in individueller Weise intelligent (bzw. "smart") bezeichnet werden, d.h. eine solche persönliche Relevanz (bzw. Relevanzinformation bzw. Relevanzwert) ist in individueller Weise spezifisch für Nutzung des jeweiligen Telekommunikationsendgeräts durch den jeweiligen Benutzer. Mit "intelligent" bzw. "smart" soll in diesem Zusammenhang verstanden werden, dass die der (eingehenden bzw. generierten) Nachricht oder Information zuzuordnende Wichtigkeit für den Kunden (bzw. den Benutzer des Telekommunikationsendgeräts) sich zum einen aus dem Kontext der aktuellen Endgerätenutzung des Telekommunikationsendgeräts und/oder aus weiteren Metainformationen der (eingehenden bzw. generierten) Nachricht oder Information - beispielsweise der sozialen Stellung des Benutzers des Telekommunikationsendgeräts zum Absender der Nachricht - und/oder aus dem persönlichen Profil und/oder den Präferenzen des Kunden und/oder aus dem Nachrichteninhalt (bzw. dem Content) ergibt. Erfindungsgemäß ist es besonders bevorzugt, wenn sich die der Nachricht oder Information zuzuordnende Wichtigkeit für den Kunden sowohl aus dem Kontext der aktuellen Endgerätenutzung des Telekommunikationsendgeräts, als auch aus weiteren Metainformationen der (eingehenden bzw. generierten) Nachricht oder Information, als auch aus dem persönlichen Profil und/oder den Präferenzen des Kunden, als auch aus dem Nachrichteninhalt (bzw. dem Content) ergibt. Erfindungsgemäß ist es ferner bevorzugt vorgesehen, dass die der (eingehenden bzw. generierten) Nachricht oder Information zuzuordnende Wichtigkeit für den Kunden (bzw. den Benutzer des Telekommunikationsendgeräts) durch das Nutzerverhalten dynamisch angepasst wird. Die sich auf das Kundenbedürfnis anpassenden Komponenten sind in der Lage, mit den vom Kunden bevorzugten und Diensten Dritter so zu kommunizieren, dass eine Priorisierung der Nachrichten je nach Relevanz möglich wird.

Im Kontext der vorliegenden Erfindung umfasst der Begriff "Telekommunikationsendgerät" ein vorzugsweise von einer einzelnen Person verwendetes elektrisches oder elektronisches Gerät mit wenigstens einer Kommunikationsschnittstelle, wobei die wenigstens eine Kommunikationsschnittstelle eine kurzreichweitige Kommunikationsschnittstelle, d.h. zur Datenübertragung über vergleichsweise kurze Entfernungen, oder eine Weitverkehrskommunikationsschnittstelle, d.h. eine Kommunikatiosschnittstelle zur Datenübertragung über vergleichsweise große Entfernungen, ist. Ein Telekommunikationsendgerät im Sinne der vorliegenden Erfindung ist insbesondere ein elektrisches oder elektronisches Gerät, welches von einer einzelnen Person verwendet wird bzw. zur Verwendung durch eine einzelne Person vorgesehen ist und somit nicht durch eine Mehrzahl von Personen verwendet wird bzw. von einer Mehrzahl von Personen in der Form "geteilt" wird, dass zu einem ersten Zeitpunkt oder während eines ersten Zeitintervalls eine erste Person das Telekommunikationsendgerät benutzt und zu einem zweiten Zeitpunkt oder während eines zweiten Zeitintervalls ein zweite Person das Telekommunikationsendgerät benutzt, wobei der erste und zweite Zeitpunkt bzw. das erste und zweite Zeitintervall sich wiederholend vorgesehen sind. Bei einem Telekommunikationsendgerät im Sinne der vorliegenden Erfindung ist eine Kommunikationsschnittstelle im Sinne einer kurzreichweitigen Kommunikationsschnittstelle beispielsweise zur Realisierung von sogenannten lokalen, kurzreichweitigen Funkverbindungen vorgesehen, beispielsweise über Entfernungen von 1 Millimeter bis 1000 Meter. Bei einem Telekommunikationsendgerät im Sinne der vorliegenden Erfindung ist eine Kommunikationsschnittstelle im Sinne einer Weitverkehrskommunikationsschnittstelle beispielsweise zur Realisierung von Weitverkehrsverbindungen, insbesondere Mobilfunkverbindungen vorgesehen, beispielsweise über Entfernungen von mehr als 1 Meter. Beispiele für Kommunikationsschnittstellen für kurzreichweitige Funkverbindungen sind Kommunikationsschnittstellen gemäß einer Variante oder gemäß mehrerer Varianten des Bluetooth-Standards, gemäß dem WLAN-Standard, gemäß einer Variante oder gemäß mehrerer Varianten des NFC-Standards (Near Field Communication, Nahfeldkommunikation), etc. Beispiele für Weitverkehrskommunikationsschnittstellen sind Kommunikationsschnittstellen gemäß einer Mobilfunkzugangstechnologie wie etwa einer Mobilfunkzugangstechnologie der zweiten Generation (2G, GSM, Global System for Mobile Communication), einer Mobilfunkzugangstechnologie der dritten Generation (3G, UMTS, Universal Mobile Telecommunication System), einer Mobilfunkzugangstechnologie der vierten Generation (4G, LTE, Long Term Evolution) oder einer der Nachfolgetechnologien. Die bei einem Telekommunikationsendgerät gemäß der vorliegenden Erfindung vorhandene wenigstens eine Kommunikationsschnittstelle kann auch derart ausgebildet sein, dass mehr als eine Kommunikationsschnittstellen vorhanden sind, insbesondere zwei Kommunikationsschnittstellen, insbesondere eine kurzreichweitige Kommunikationsschnittstelle und eine Weitverkehrskommunikationsschnittstelle. Weiterhin ist es erfindungsgemäß bevorzugt vorgesehen, dass das Telekommunikationsendgerät mehr als eine kurzreichweitige Kommmunikationsschnittstelle und/oder mehr als eine Weitverkehrskommunikationsschnittstelle aufweist. Für den Fall, dass das Telekommunikationsendgerät eine Weitverkehrskommunikationsschnittstelle aufweist, ist es erfindungsgemäß bevorzugt, dass das Telekommunikationsendgerät entsprechend eingerichtet ist, insbesondere ein Identifikationsmodul oder eine Mehrzahl von Identifikationsmodulen aufweist, beispielsweise im Sinne eines oder mehrerer SIM-Module (Subscriber Identity Module) oder im Sinne eines oder mehrerer eSIM-Module (embedded Subscriber Identity Module).

Erfindungsgemäß ist es vorgesehen, dass zur individuellen Prädiktion der Nutzung und/oder der individuellen Anpassung der Nutzung eines zur Bedienung durch einen Benutzer vorgesehenen personalisierten Telekommunikationsendgeräts verschiedene Daten generiert bzw. erfasst werden, wobei solche Daten, die die Nutzung des Telekommunikationsendgeräts widerspiegeln, vorrangig bzw. sogar ausschließlich in dem Telekommunikationsendgerät - d.h. in einer Speichereinrichtung des Telekommunikationsendgerät bzw. einer dem Telekommunikationsendgerät zugeordneten Speichereinrichtung gespeichert werden. Hierdurch ist es in vorteilhafter Weise möglich, eine Verbesserung des Niveaus des Respekts der Privatsphäre bzw. des Datenschutzes des Benutzers des Telekommunikationsendgeräts zu erreichen. Die Daten, welche die Nutzung des Telekommunikationsendgeräts widerspiegeln, werden insbesondere durch das Telekommunikationsendgerät generiert. Das Telekommunikationsendgerät weist hierzu insbesondere eine Benutzerschnittstelle sowie ein Verhaltensdetektionselement auf, wobei mittels des Verhaltensdetektionselements zum einen mittels der Benutzerschnittstelle vorgenommene Benutzungshandlungen des Benutzers und zum anderen Kontextinformationen des Telekommunikationsendgeräts detektiert werden. Das Telekommunikationsendgerät weist ferner ein Relevanzbestimmungselement und eine Mehrzahl von Regelfaktoren auf, wobei eine Mehrzahl an Ereignissen betrachtet wird. Im Fall des Eintretens, zu einem bestimmten Zeitpunkt, eines bestimmten Ereignisses aus der Mehrzahl an Ereignissen wird erfindungsgemäß durch das Relevanzbestimmungselement wenigstens ein bestimmter Regelfaktor aus der Mehrzahl von Regelfaktoren ausgewählt, so dass der bestimmte Regelfaktor (bzw. die Regel) auf das bestimmte Ereignis angewandt wird. Hierbei ist es erfindungsgemäß bevorzugt, wenn das Verfahren derart durchgeführt wird, dass das Benutzungshandlungen fortlaufend mittels des Verhaltensdetektionselements aufgenommen bzw. detektiert werden, so dass das Relevanzbestimmungselement die Regelfaktoren fortlaufend zu optimieren in der Lage, so dass nicht nur eine immer bessere Adaption an eine zunächst als statisch aufgefasste individuelle Nutzung des Telekommunikationsendgeräts ermöglicht wird, sondern das Relevanzbestimmungselement mit den Regelfaktoren auch an eine sich während eines bestimmten zeitlichen Verlaufs ändernde Benutzung des Telekommunikationsendgerät durch den Benutzer angepasst werden.

Erfindungsgemäß ist es hierzu vorgesehen, dass im ersten Verfahrensschritt für ein vorgegebenes Zeitintervall einerseits das Verhalten des Benutzers hinsichtlich der mittels der Benutzerschnittstelle vorgenommenen Benutzungshandlungen und andererseits Kontextinformationen des Telekommunikationsendgeräts detektiert werden. Auf diese Weise ist es erfindungsgemäß in vorteilhafter Weise möglich, dass Korrelationen zwischen einerseits bestimmten vorliegenden Kontextinformationen des Telekommunikationsendgeräts (etwa hinsichtlich des Zeitpunkts eines Ereignisses und/oder hinsichtlich des momentanen Standorts des Telekommunikationsendgeräts (beispielsweise auch hinsichtlich des relativen Standorts zu einem anderen Telekommunikationsendgerät oder einer anderen stationären oder beweglichen Einrichtung) und/oder hinsichtlich der Geschwindigkeit des Telekommunikationsendgeräts und/oder hinsichtlich der Hintergrundgeräusche und/oder hinsichtlich des Informationsinhalts eines Telefonbuchspeichers und/oder eines Nachrichtenspeichers und/oder eines Kalenderspeichers des Telekommunikationsendgeräts) und andererseits der mittels der Benutzerschnittstelle vorgenommenen Benutzungshandlungen ableitbar sind. Das vorgegebene Zeitintervall umfasst hierbei den Zeitraum, innerhalb welchem das Relevanzbestimmungselement eine Adaptierung der Regelfaktoren vornimmt, diese also änderbar sind bzw. geändert werden. Erfindungsgemäß ist es vorteilhaft möglich, dass das vorgegebene Zeitintervall einem plastischen Nutzungszeitraum (von beispielsweise einer Minute oder 5 Minuten oder 10 Minuten oder 15 Minuten oder 30 Minuten oder einer Stunde oder zwei Stunden oder 6 Stunden oder 12 Stunden oder 24 Stunden oder 48 Stunden oder 72 Stunden oder einer Woche oder zwei Wochen oder vier Wochen oder einem Monat oder zwei Monaten oder drei Monaten oder 6 Monaten oder 12 Monate) entspricht, wobei während des plastischen Nutzungszeitraums eine Anpassung bzw. Veränderung der Regelfaktoren vorgenommen wird und wobei auf den plastischen Nutzungszeitraum (bzw. dem vorgegebenen Zeitintervall) ein nichtplastischer Nutzungszeitraum folgt, während dem keine Anpassung bzw. Veränderung der Regelfaktoren mehr vorgenommen wird. Alternativ zu einer solchen zweischrittigen Vorgehensweise (d.h. während des vorgegebenen Zeitintervalls bzw. dem plastischen Nutzungszeitraum findet eine Anpassung bzw. Veränderung der Regelfaktoren statt und während des nachfolgenden nichtplastischen Nutzungszeitraums findet eine solche Anpassung bzw. Veränderung nicht statt) ist es erfindungsgemäß auch bevorzugt vorgesehen und vorteilhaft möglich, dass sich das vorgegebene Zeitintervall bzw. der plastische Nutzungszeitraum des Telekommunikationsendgeräts über den gesamten Nutzungszeitraum erstreckt (und somit kein nichtplastischer Nutzungszeitraum vorgesehen ist) oder aber dass sich das vorgegebene Zeitintervall bzw. der plastische Nutzungszeitraum des Telekommunikationsendgeräts über eine gewisse Zeit (von beispielsweise einer Minute oder 5 Minuten oder 10 Minuten oder 15 Minuten oder 30 Minuten oder einer Stunde oder zwei Stunden oder 6 Stunden oder 12 Stunden oder 24 Stunden oder 48 Stunden oder 72 Stunden oder einer Woche oder zwei Wochen oder vier Wochen oder einem Monat oder zwei Monaten oder drei Monaten oder 6 Monaten oder 12 Monate) erstreckt, sich daran anschließend ein nichtplastischer Nutzungszeitraum, ebenfalls während einer gewissen Zeit (von beispielsweise einer Minute oder 5 Minuten oder 10 Minuten oder 15 Minuten oder 30 Minuten oder einer Stunde oder zwei Stunden oder 6 Stunden oder 12 Stunden oder 24 Stunden oder 48 Stunden oder 72 Stunden oder einer Woche oder zwei Wochen oder vier Wochen oder einem Monat oder zwei Monaten oder drei Monaten oder 6 Monaten oder 12 Monate) anschließt. Im zweiten Verfahrensschritt, zeitlich nach oder während des ersten Verfahrensschritts, wird angesichts des Eintretens eines ersten Ereignisses aus der Mehrzahl von Ereignissen wenigstens ein generierter oder geänderter Regelfaktor in Abhängigkeit des Verhaltens des Benutzers hinsichtlich der mittels der Benutzerschnittstelle vorgenommenen Benutzungshandlungen und/oder in Abhängigkeit der Kontextinformationen des Telekommunikationsendgeräts generiert oder geändert. Der zweite Verfahrensschritt findet somit noch während des vorgegebenen Zeitintervalls bzw. während des plastischen Nutzungszeitraums statt oder aber im Wesentlichen unmittelbar anschließend daran. Im dritten Verfahrensschritt, zeitlich nach dem zweiten Verfahrensschritt (d.h. zeitlich nach oder während des plastischen Nutzungszeitraums), wird der generierte oder geänderte Regelfaktor im Fall des Eintretens des ersten Ereignisses und/oder im Fall des Eintretens eines zweiten Ereignisses aus der Mehrzahl von Ereignissen in Abhängigkeit der Kontextinformationen des Telekommunikationsendgeräts angewandt. Wie erwähnt ist es erfindungsgemäß vorgesehen, dass sowohl das Verhaltensdetektionselement als auch das Relevanzbestimmungselement mit den Regelfaktoren Teil des Telekommunikationsendgeräts sind und somit ein hohes Maß an Datensicherheit bzw. Datenschutz für den Benutzer des Telekommunikationsendgeräts besteht.

Erfindungsgemäß ist es jedoch darüber hinaus bevorzugt, dass das Verhaltensdetektionselement erste Konfigurationsdaten aufweist, dass das Relevanzbestimmungselement zweite Konfigurationsdaten aufweist und dass die Mehrzahl von Regelfaktoren dritte Konfigurationsdaten aufweisen, wobei die ersten, zweiten und dritten Konfigurationsdaten im Telekommunikationsendgerät gespeichert werden. Dies bedeutet insbesondere, dass zur Durchführung des erfindungsgemäßen Verfahrens keinerlei nutzerbezogene Daten - insbesondere Kontextinformationen als Teil der ersten Konfigurationsdaten des Verhaltensdetektionselements - vom Telekommunikationsendgerät auf eine Servereinrichtung übertragen werden müssen.

Hierdurch ist es erfindungsgemäß in vorteilhafter Weise möglich, dass ein hohes Maß an Datensicherheit bzw. Datenschutz für den Benutzer des Telekommunikationsendgeräts realisierbar ist.

Erfindungsgemäß ist es ferner bevorzugt, dass das Telekommunikationsendgerät wenigstens einen Signalgeber aufweist, wobei sich aus der Anwendung der verschiedenen Regelfaktoren aus der Mehrzahl von Regelfaktoren
-- die Aktivierung und/oder zeitweise Aktivierung und/oder
-- die Teilaktivierung und/oder zeitweise Teilaktivierung und/oder
-- die Deaktivierung und/oder zeitweise Deaktivierung
des wenigstens einen Signalgebers ergibt.

Hierdurch ist es erfindungsgemäß vorteilhaft möglich, dass die Aktivierung und/oder die zeitweise Aktivierung bzw. Deaktivierung und/oder die zeitweise Deaktivierung bzw. die Teilaktivierung und/oder zeitweise Teilaktivierung des Signalgebers bzw. auch der Mehrzahl von Signalgebern des Telekommunikationsendgeräts an die Präferenzen des Benutzers des Telekommunikationsendgeräts anpassbar ist. Als Signalgeber sind hierbei insbesondere optische, akustische, haptische und/oder olfaktorische Signalgeber vorgesehen.

Es ist ferner erfindungsgemäß bevorzugt, dass eine Mehrzahl von Betriebszuständen des Telekommunikationsendgeräts aufgrund der Detektion, mittels des Verhaltensdetektionselements, von mittels der Benutzerschnittstelle vorgenommener Benutzungshandlungen des Benutzers sowie von Kontextinformationen des Telekommunikationsendgeräts detektiert werden.

Somit ist es erfindungsgemäß vorteilhaft möglich, dass eine besonders flexible Nutzung und eine besonders gute Adaption des Verhaltens des Telekommunikationsendgeräts an die Bedürfnisse des Nutzers ermöglicht wird und zwar ohne, dass ein hohes Maß an Konfigurationsaufwand für den Nutzer besteht.

Erfindungsgemäß ist es ferner auch bevorzugt, dass das Telekommunikationsendgerät eine Mehrzahl an Sensoren aufweist, wobei die Kontextinformationen mittels der Mehrzahl an Sensoren erfasst werden, wobei die Mehrzahl an Sensoren insbesondere einen Zeitmesser und/oder einen Empfänger zur Nutzung eines globalen Navigationssatellitensystems (GNSS, Global Navigation Satellite System) und/oder einen Lokalisationssensor basierend auf der Auswertung der Funkumgebung des Telekommunikationsendgeräts und/oder einen Trägheitssensor, insbesondere ein Beschleunigungssensor, und/oder ein Mikrofon aufweist, wobei die Kontextinformationen insbesondere:
-- der Zeitpunkt eines Ereignisses und/oder
-- der Standort des Telekommunikationsendgeräts, insbesondere der Standort des Telekommunikationsendgeräts relativ zu einem anderen Telekommunikationsendgerät und/oder relativ zu einer anderen stationären oder beweglichen Einrichtung, und/oder
-- die Geschwindigkeit des Telekommunikationsendgeräts und/oder
-- die Hintergrundgeräusche des Telekommunikationsendgeräts und/oder
-- der Informationsinhalt eines Telefonbuchspeichers und/oder eines Nachrichtenspeichers und/oder eines Kalenderspeichers des Telekommunikationsendgeräts
umfassen

Hierdurch ist es erfindungsgemäß vorteilhaft möglich, dass eine besonders präzise Bestimmung der Kontextinformationen möglich ist, so dass die Regelfaktoren besonders genau und auf die jeweilige Benutzungssituation abgestimmt definierbar und ermittelbar sind.

Ferner ist es erfindungsgemäß auch bevorzugt, dass das Telekommunikationsendgerät ein Targetingelement aufweist, wobei das Targetingelement Targetinginformationen abfängt, die der Benutzer des Telekommunikationsendgeräts explizit freigibt, wobei die Targetinginformationen Teil der Kontextinformationen sind.

Hierdurch ist es erfindungsgemäß vorteilhaft möglich, dass die individuelle Prädiktion der Nutzung und/oder die individuelle Anpassung der Nutzung des Telekommunikationsendgeräts auch den Bereich von dem Nutzer des Telekommunikationsendgerät übermittelter Werbung umfasst.

Erfindungsgemäß ist es ferner auch bevorzugt, dass die Mehrzahl von Regelfaktoren eine erste Teilmenge an Regelfaktoren und eine zweite Teilmenge an Regelfaktoren aufweist, wobei die erste Teilmenge an Regelfaktoren automatisch generierte oder geänderte Regelfaktoren umfasst und wobei die zweite Teilmenge an Regelfaktoren durch den Benutzer des Telekommunikationsendgeräts definierte Regelfaktoren umfasst.

Somit ist es erfindungsgemäß vorteilhaft möglich, dass gewisse Regelfaktoren (nämlich die Regelfaktoren der ersten Teilmenge) - zumindest zunächst d.h. während eines ersten Nutzungszeitraums - als ein Standard an Regelfaktoren vorgegeben sind und die Regelfaktoren der zweiten Teilmenge benutzerindividuell generiert werden.

Erfindungsgemäß ist es ferner auch bevorzugt, dass die Mehrzahl an Ereignissen eine erste Teilmenge an Ereignissen und eine zweite Teilmenge an Ereignissen aufweist, wobei die ersten Teilmenge an Ereignissen für den Benutzer des Telekommunikationsendgeräts eingehende Nachrichten umfasst und wobei die zweite Teilmenge an Ereignissen Werbenachrichten und/oder Informationsangebote umfasst.

Ein weiterer Gegenstand der vorliegenden Erfindung betrifft ein Telekommunikationsendgerätgemäß Anspruch 8.

Mittels eines solchen Telekommunikationsendgeräts ist es erfindungsgemäß in vorteilhafter Weise möglich, dass die oben - mit Bezug auf das erfindungsgemäße Verfahren - beschriebenen Aspekte bzw. Vorteile realisierbar sind. Insbesondere ist es erfindungsgemäß vorteilhaft möglich, dass sowohl das Verhaltensdetektionselement als auch das Relevanzbestimmungselement mit den Regelfaktoren Teil des Telekommunikationsendgeräts sind und somit ein hohes Maß an Datensicherheit bzw. Datenschutz für den Benutzer des Telekommunikationsendgeräts besteht.

Erfindungsgemäß ist es jedoch darüber hinaus auch mit Blick auf das Telekommunikationsendgerät bevorzugt, dass das Verhaltensdetektionselement erste Konfigurationsdaten aufweist, dass das Relevanzbestimmungselement zweite Konfigurationsdaten aufweist und dass die Mehrzahl von Regelfaktoren dritte Konfigurationsdaten aufweisen, wobei die ersten, zweiten und dritten Konfigurationsdaten im Telekommunikationsendgerät gespeichert sind.

Hierdurch ist es erfindungsgemäß in vorteilhafter Weise möglich, dass ein hohes Maß an Datensicherheit bzw. Datenschutz für den Benutzer des Telekommunikationsendgeräts realisierbar ist.

Erfindungsgemäß ist es ferner auch bevorzugt, dass das Telekommunikationsendgerät wenigstens einen Signalgeber aufweist, wobei sich aus der Anwendung der verschiedenen Regelfaktoren aus der Mehrzahl von Regelfaktoren
-- die Aktivierung und/oder zeitweise Aktivierung und/oder
-- die Teilaktivierung und/oder zeitweise Teilaktivierung und/oder
-- die Deaktivierung und/oder zeitweise Deaktivierung
des wenigstens einen Signalgebers ergibt.

Hierdurch ist es erfindungsgemäß vorteilhaft möglich, dass die Aktivierung und/oder die zeitweise Aktivierung bzw. Deaktivierung und/oder die zeitweise Deaktivierung bzw. die Teilaktivierung und/oder zeitweise Teilaktivierung des Signalgebers bzw. auch der Mehrzahl von Signalgebern des Telekommunikationsendgeräts an die Präferenzen des Benutzers des Telekommunikationsendgeräts anpassbar ist. Als Signalgeber sind hierbei insbesondere optische, akustische, haptische und/oder olfaktorische Signalgeber vorgesehen, insbesondere in Form von Beleuchtungseinrichtungen oder Anzeigeeinrichtungen (etwa umfassend einzelne Leuchtdioden, LEDs, oder Anzeigen in Form etwa von TFT-Displays (Thin Film Transistor displays) oder auch in Form von bzw. umfassend OLEDs (Organic Light Emitting Diodes)) und/oder in Form von akustischen Signalgebern wie Lautsprechern und/oder in Form von haptischen Signalgebern wie Vibrationsaktuatoren.

Ferner ist es erfindungsgemäß auch bevorzugt, dass das Telekommunikationsendgerät eine Mehrzahl von Betriebszuständen des Telekommunikationsendgeräts aufweist, wobei das Telekommunikationsendgerät derart konfiguriert ist, dass die Mehrzahl von Betriebszuständen aufgrund der Detektion, mittels des Verhaltensdetektionselements, von mittels der Benutzerschnittstelle vorgenommener Benutzungshandlungen des Benutzers sowie von Kontextinformationen des Telekommunikationsendgeräts detektiert werden.

Somit ist es erfindungsgemäß auch mit Blick auf das erfindungsgemäße Telekommunikationsendgerät vorteilhaft möglich, dass eine besonders flexible Nutzung und eine besonders gute Adaption des Verhaltens des Telekommunikationsendgeräts an die Bedürfnisse des Nutzers ermöglicht wird und zwar ohne, dass ein hohes Maß an Konfigurationsaufwand für den Nutzer besteht.

Erfindungsgemäß ist es ferner auch bevorzugt, dass das Telekommunikationsendgerät eine Mehrzahl an Sensoren aufweist, wobei das Telekommunikationsendgerät derart konfiguriert ist, dass die Kontextinformationen mittels der Mehrzahl an Sensoren erfasst werden, wobei die Mehrzahl an Sensoren insbesondere einen Zeitmesser und/oder einen Empfänger zur Nutzung eines globalen Navigationssatellitensystems (GNSS, Global Navigation Satellite System) und/oder einen Lokalisationssensor basierend auf der Auswertung der Funkumgebung des Telekommunikationsendgeräts und/oder einen Trägheitssensor, insbesondere ein Beschleunigungssensor, und/oder ein Mikrofon aufweist, wobei die Kontextinformationen insbesondere:
-- der Zeitpunkt eines Ereignisses und/oder
-- der Standort des Telekommunikationsendgeräts, insbesondere der Standort des Telekommunikationsendgeräts relativ zu einem anderen Telekommunikationsendgerät und/oder relativ zu einer anderen stationären oder beweglichen Einrichtung, und/oder
-- die Geschwindigkeit des Telekommunikationsendgeräts und/oder
-- die Hintergrundgeräusche des Telekommunikationsendgeräts und/oder
-- der Informationsinhalt eines Telefonbuchspeichers und/oder eines Nachrichtenspeichers und/oder eines Kalenderspeichers des Telekommunikationsendgeräts
umfassen

Hierdurch ist es erfindungsgemäß - auch mit Blick auf das Telekommunikationsendgerät - vorteilhaft möglich, dass eine besonders präzise Bestimmung der Kontextinformationen möglich ist, so dass die Regelfaktoren besonders genau und auf die jeweilige Benutzungssituation abgestimmt definierbar und ermittelbar sind.

Ferner bezieht sich die vorliegende Erfindung auch auf ein Computerprogramm mit Programmcodemitteln, mit deren Hilfe die Schritte des erfindungsgemäßen Verfahrens durchführbar sind, wenn das Computerprogramm auf einer programmierbaren Einrichtung, insbesondere auf einem programmierbaren Telekommunikationsendgerät, ausgeführt wird.

Weiterhin ist Gegenstand der vorliegenden Erfindung ein Computerprogrammprodukt mit einem computerlesbaren Medium und einen auf dem computerlesbaren Medium gespeicherten Computerprogramm mit Programmcodemitteln, die dazu geeignet sind, dass die Schritte des erfindungsgemäßen Verfahrens durchführbar sind, wenn das Computerprogramm auf einer programmierbaren Einrichtung, insbesondere auf einem programmierbaren Telekommunikationsendgerät, ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt schematisch ein Telekommunikationsnetz mit einem Zugangsnetz, einem Kernnetz, einer Mehrzahl von Funkzellen sowie einem erfindungsgemäßen Telekommunikationsendgerät.
- **Figur 2**: zeigt schematisch ein erfindungsgemäßes Telekommunikationsendgerät.
- **Figur 3**: zeigt schematisch ein Verhaltensdetektionselement für ein Telekommunikationsendgerät gemäß der vorliegenden Erfindung.
- **Figur 4**: zeigt schematisch eine Blockdarstellung des Verhaltens-detektionselements, des Relevanzbestimmungselements und der Regelfaktoren für ein erfindungsgemäßes Telekommunikationsendgerät.

### Ausführungsformen der Erfindung

Die vorliegende Erfindung wird mit Bezug auf besondere Ausführungen und mit Bezug zu den beiliegenden Zeichnungen beschrieben, wobei jedoch die Erfindung nicht auf diese Ausführungen und auf diese Zeichnungen beschränkt ist, sondern durch die Patentansprüche bestimmt ist. Die Zeichnungen sind nicht beschränkend zu. In den Zeichnungen können zu Darstellungszwecken bestimmte Elemente vergrößert bzw. übertrieben sowie nicht maßstabsgerecht dargestellt sein.

Falls nichts anderes spezifisch angegeben wird, umfasst die Verwendung eines unbestimmten oder bestimmten Artikels mit Bezug auf ein Wort in der Einzahl, beispielsweise "ein", "eine", "eines", "der", "die", "das", auch die Mehrzahl eines solchen Wortes. Die Bezeichnungen "erster", "erste", "erstes", "zweiter", "zweite", "zweites" und so fort in der Beschreibung und in den Ansprüchen werden zur Unterscheidung zwischen ähnlichen oder zu unterscheidenden gleichen Elementen verwendet und nicht zwingend zur Beschreibung einer zeitlichen oder sonstigen Abfolge. Die derart benutzten Begriffe sind grundsätzlich als unter entsprechenden Bedingungen austauschbar anzusehen.

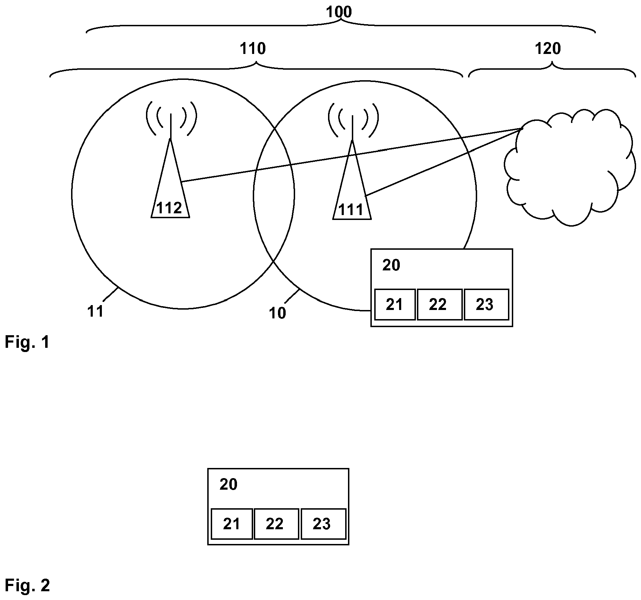

In Figur 1 ist ein Telekommunikationsnetz 100 schematisch in Form eines zellulären Telekommunikationsnetz bzw. eines Mobilfunknetz dargestellt. Das Telekommunikationsnetz 100 weist ein Zugangsnetz 110 und ein Kernnetz 120 auf, wobei das Zugangsnetz 110 eine Mehrzahl von Funkzellen aufweist, wobei eine erste Funkzelle 11 und eine zweite Funkzelle 12 in Figur 1 schematisch dargestellt sind. Ferner ist in Figur 1 schematisch ein erfindungsgemäße Telekommunikationsendgerät 20 dargestellt.

In Figur 2 ist ein erfindungsgemäßes Telekommunikationsendgerät 20 schematisch dargestellt. Das Telekommunikationsendgerät 20 weist ein Verhaltensdetektionselement 21, ein Relevanzbestimmungselement 22 und eine Mehrzahl von Regelfaktoren 23 auf.

Gemäß der vorliegenden Erfindung ist es vorteilhaft möglich, dass ein Mehrwert für den Kunden bzw. den Benutzer durch die erfindungsgemäße Nutzung des Telekommunikationsendgeräts bzw. durch die Einrichtung des Telekommunikationsendgeräts zur erfindungsgemäßen Nutzung generiert wird. Ferner ist es erfindungsgemäß vorteilhaft möglich, dass die Einfachheit bei der Benutzung des Telekommunikationsendgeräts erhöht wird und dennoch ein maximales Maß an Privatsphäre sichergestellt wird.

Dabei besteht das größte Problem darin, zu erkennen, welche Notifikationen, Informationen im jeweiligen Zeitpunkt für den Kunden bzw. den Benutzer des Telekommunikationsendgeräts die höchste Relevanz haben.

Erfindungsgemäß ist es in vorteilhafter Weise vorgesehen, dass unter anderem der Kontext der Nutzung des Telekommunikationsendgeräts 20 und/oder der Absender einer Nachricht und/oder der jeweilige Inhalt der Nachricht bewertet eine Relevanzpriorisierung vorgenommen wird. Dies steht im Gegensatz zu bisher bekannten Verfahren, bei denen innerhalb für Telekommunikationsendgeräte bzw. für mobile Geräte gängige Betriebssysteme in der Regel eine sequentielle Auflistung von Notifikationen bzw. Informationen ohne Vornahme einer Priorisierung und ohne Berücksichtigung der anliegenden Relevanz für den Adressaten der Nachricht realisiert ist. Beispielsweise werden Notifikationen auf einer speziellen Seite oder in einer spezielle Sektion gesammelt, wie beispielsweise im Sperrbildschirm bzw. in einer Statusleiste (ebenfalls bekannt als "notification bar") bzw. in Form eines Pop-Up-Fensters oder einer Pop-Up-Nachricht bzw. in einer Anwendung bzw. Applikation. Die Notifikationen werden auf diese Weise zwar an den Benutzer ausgespielt bzw. diesem signalisiert, jedoch ohne Priorisierung und ohne dass das Betriebssystem die Möglichkeit einer Priorisierung hat.

Gemäß der vorliegenden Erfindung ist es vorteilhaft möglich, eine individuelle Prädiktion der Nutzung bzw. eine individuelle Anpassung der Nutzung eines Telekommunikationsendgeräts 20 zu realisieren, indem das Verhaltensdetektionselement 21 und das Relevanzbestimmungselement 22 in dem Telekommunikationsendgerät 20 eingesetzt wird. Das Verhaltensdetektionselement 21 und das Relevanzbestimmungselement 22 wird im Folgenden auch als eine "Self Lerning Behavioral Engine" (bzw. "selbst lernende Verhaltensmaschine"). Hierdurch ist es erfindungsgemäß in vorteilhafter Weise möglich, dass dem Kunden Informationen oder Location Based Services und App Empfehlungen am richtigen Ort, zur richtigen Zeit und besonders im richtigen Moment anzuzeigen bzw. zur Verfügung zu stellen, d.h. in einem Moment zu dem der Nutzer solche Information auch sehen will. Erfindungsgemäß ist es insbesondere von Vorteil, dass beispielsweise beim Targeting verschiedene Arten der Information mit dem Kontext des Empfängers (d.h. des Nutzers) priorisiert werden können, wobei es jedoch erfindungsgemäß hierfür nicht erforderlich ist, die dafür angewandten Regeln und die dahinterliegenden Daten wie beispielsweise Nutzerpräfernzen und Relevanzwahrscheinlichkeiten vom Bereich des Telekommunikationsendgeräts an eine andere Stelle (insbesondere eine Servereinrichtung eines Werbeanbieters) zu übertragen, d.h. diese Informationen müssen das mobile Telekommunikationsendgerät (bzw. lokale Endgerät) nicht verlassen. Dadurch resultiert ein im Gegensatz zu bekannten Verfahren höheres Maß an Datenschutz für den Nutzer; insbesondere ist es nicht erforderlich, dass persönliche oder kritische Daten zentral auf Massenspeichern (insbesondere auf solchen Massenspeichern (etwa von werbetreibenden Konzernen) außerhalb des Bereichs bzw. der Herrschaft (des Nutzers) des Telekommunikationsendgeräts) vorgehalten werden. Die Priorisierung bzw. Relevanzeinstufung (d.h. Auswahl/Entscheidung) hinsichtlich der dem Nutzer zu signalisierenden Nachrichten bzw. Informationen findet erfindungsgemäß statt, ohne dass Datenschutz Richtlinien missachtet werden, da die Bearbeitung bzw. Verarbeitung der relevanten Daten gemäß der vorliegenden Erfindung ausschließlich innerhalb des Telekommunikationsendgeräts, d.h. im mobilen Gerät, stattfindet und die gesammelten Daten damit lediglich dem Kunden (und seinem Gerät bzw. dem Telekommunikationsendgerät 20) bekannt sind. Erfindungsgemäß werden somit keine Daten gesammelt, sondern lediglich lokal (d.h. im Telekommunikationsendgerät 20) verwendet, um Berechnungsfaktoren progressiv anzupassen.

Erfindungsgemäß ist es vorteilhaft möglich, dass Informationen, Nachrichten, Notifikationen und/oder Anwendungen (für einen Nutzer des Telekommunikationsendgeräts 20) so gesteuert werden, dass angepasst an Situation und Profil des Adressaten und unter Berücksichtigung des Inhalts und/oder des Absenders der Nachricht diese entweder priorisiert oder depriorisiert werden oder aber in weiteren Umsetzungsstufen sogar zeitlich zurückgehalten und zum passenden Zeitpunkt ausgespielt werden. Erfindungsgemäß ist es daher vorgesehen, dass das Telekommunikationsendgerät 20 durch das erfindungsgemäße Verfahren die Fähigkeit erhält, personalisiert - d.h. im Sinne eines personalisierten Telekommunikationsendgeräts - zu reagieren, indem die Relevanz von Informationen (bzw. Nachrichten bzw. Notifikationen) erkannt wird und das Telekommunikationsendgerät 20 in der Lage ist, anhand der o. g. Kriterien den passenden Ort und den passenden Zeitpunkt für das Ausspielen der Information zu erhalten bzw. zu bestimmen. Hierbei ist es erfindungsgemäß vorgesehen, dass aufgrund von an Wahrscheinlichkeiten die Relevanz von Informationen (bzw. Nachrichten bzw. Notifikationen) festgestellt wird. Die Grundlage dafür bietet ein nutzerindividuelles System aus kontextbezogenen, profilbezogenen, sozialen und inhaltsbezogenen Regeln.

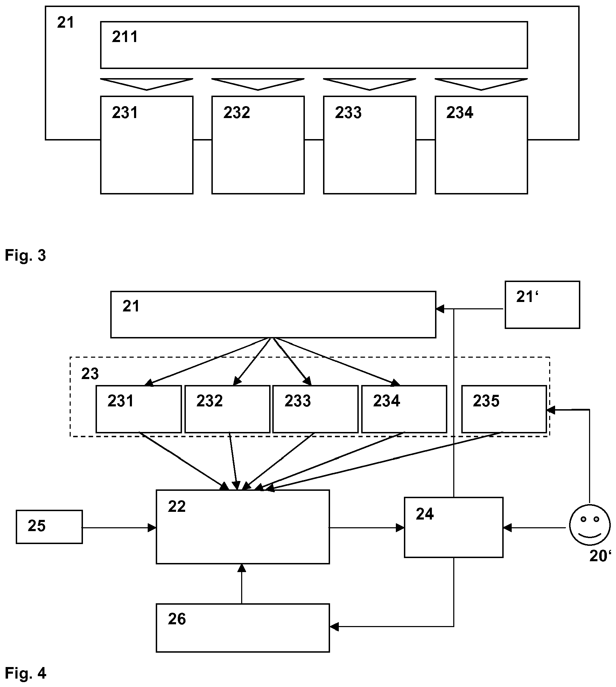

In Figur 3 ist schematisch ein Verhaltensdetektionselement 21 für ein erfindungsgemäßes Telekommunikationsendgerät 20 dargestellt. Das Verhaltensdetektionselement 21 umfasst ein Verhaltenselement 211, welches im Folgenden auch als Behavioral Framework bezeichnet wird und mit dem Gebrauch von Notifikationen (bzw. Nachrichten), Aktionen (insbesondere des Nutzers des Telekommunikationsendgeräts) sowie der besuchten Internetseiten (browsing history) befasst ist. Hierdurch werden die Relevanzwerte der verschiedenen Regeln in Echtzeit bestimmt. Die Regeln bzw. Regelfaktoren können erfindungsgemäß in Kontextregeln 231, Profilregeln 232, soziale Regeln 233 und Inhaltsregeln 234 differenziert werden. Hierbei umfassen beispielsweise die Kontextregeln 231 die Zeitzone des Telekommunikationsendgeräts 20, den Ort des Telekommunikationsendgeräts 20, die Geschwindigkeit des Telekommunikationsendgeräts 20, das Kamerabild des Telekommunikationsendgeräts 20 und/oder die Umgebungsgeräusche des Telekommunikationsendgeräts 20. Weiterhin umfassen die Profilregeln 232 beispielsweise die persönlichen Präferenzen des Nutzers des Telekommunikationsendgeräts 20 und/oder die Zielgruppenbestimmung. Weiterhin umfassen die sozialen Regeln 233 insbesondere die im Telekommunikationsendgerät 20 vorhandenen bzw. gespeicherten Kontakte, die benutzten Kommunikationskanäle und/oder die Personen in der Umgebung des Telekommunikationsendgeräts 20. Weiterhin umfassen die Inhaltsregeln 234 den Inhalt der Notifikation bzw. der Nachricht, den Informationsinhalt, den Inhalt eines Drittanbieters und/oder den Inhalt einer Anwendung (App).

In Figur 4 ist schematisch eine Blockdarstellung des Verhaltensdetektionselements 21, des Relevanzbestimmungselements 22 und der Regelfaktoren 23 für ein erfindungsgemäßes Telekommunikationsendgerät 20 dargestellt. Im Falle eines Ereignisses 25 - beispielsweise eine eingehende Nachricht oder eine vom Telekommunikationsendgerät 20 generierte Information - wird dies vom Relevanzbestimmungselement 22 detektiert bzw. es wird eine Information bzw. eine Nachricht (bezüglich des Ereignisses) an das Relevanzbestimmungselement 22 übertragen. Durch das Relevanzbestimmungselement 22 wird die Behandlung des Ereignisses 25 bestimmt, beispielsweise eine Ausgabe einer optischen Information auf einer Anzeigeeinrichtung 24 des Telekommunikationsendgeräts 20 oder ein Vibrationssignal oder ein akustisches Signal. Diese Behandlung des Ereignisses 25 erfolgt erfindungsgemäß in Abhängigkeit von Regeln bzw. Regelfaktoren 23, die insbesondere aufgrund des zeitlich früheren Verhaltens eines Nutzers 20' des Telekommunikationsendgeräts 20 generiert sind bzw. wurden. Zur Generierung solcher Regeln bzw. Regelfaktoren 23 ist es erfindungsgemäß vorgesehen, dass die Nutzerreaktion auf eine zeitlich frühere Behandlung von früheren Ereignissen - während eines vorgegebenen Zeitintervalls und während des ersten Verfahrensschritts - durch das Verhaltensdetektionselement 21 erfasst wurde und diese Nutzerreaktion in Form der Regeln bzw. Regelfaktoren 23 abgelegt wurde. Die Regeln bzw. Regelfaktoren können erfindungsgemäß in Kontextregeln 231, Profilregeln 232, soziale Regeln 233 und Inhaltsregeln 234 differenziert werden, wobei ferner noch Vetoregeln 235 hinzutreten, die direkt durch den Nutzer 20' des Telekommunikationsendgeräts 20 generiert bzw. erstellt werden. Im Verhaltensdetektionselement 21 werden vorrangig die Nutzerreaktionen auf zeitlich frühere Ereignisse zur Generierung der Regeln bzw. Regelfaktoren 23 herangezogen, jedoch sind auch andere Quellen 21' (wie Telefonbucheinträge, Kontaktlisten, etc.) zur Generierung der Regeln bzw. Regelfaktoren 23 erfindungsgemäß vorgesehen. Ferner ist es erfindungsgemäß vorgesehen, dass die Behandlung des Ereignisses 25 in Abhängigkeit von Informationen (Targetinginformation) aus einem Targetingelement 26 (im Folgenden auch als "Targetingengine" bezeichnet) erfolgt. Hierbei ist es ebenfalls vorgesehen, dass regelbasiert die Nutzerreaktion (oder auch eine Nutzeraktion, beispielsweise eine Nutzeraktion in einem Browserprogramm) im Targetingelement 26 erfasst wurde eine durch den Nutzer 20' (wahrscheinlich) gewünschte Behandlung indiziert wird.

Erfindungsgemäß wird somit ein Verhaltensdetektionselement 21 (Behavioral Framework Engine, BFE) realisiert, welches Informationen über das Verhalten des Users (bzw. des Nutzers 20') des Telekommunikationsendgeräts 20 wie beispielsweise ob und wann der Nutzer 20' eine Nachricht gelesen oder gelöscht hat, oder einen Anruf angenommen oder unterdruckt hat, zurück gerufen oder schriftlich auf etwa WhatsApp-Nachrichten geantwortet hat. Weiterhin bekommt das Verhaltensdetektionselement 21 (bzw. der BFE) Informationen aus anderen Quellen 21' wie z. B. im Gerät vorhandenen Kontaktlisten, Telefonbucheinträgen sowie Kalendereinträgen aber auch externe ähnliche Informationsquellen, die eine Anbindung ermöglichen. Das Verhaltensdetektionselement 21 bzw. der BFE verwendet auch Informationen über Zeit, Standort, Geschwindigkeit Hintergrundgeräusche, etc. des Telekommunikationsendgeräts 20. Zusammenfassend entsprechen diese den Regeln bzw. Regelfaktoren sowie vom Nutzer 20' eingestellte Präferenzen, um die Regelfaktoren (Rules Factors) dynamisch zu verändern und dem Verhalten des Users bzw. Nutzers 20' ständig anzupassen. Die generierten Regelfaktoren 23 stellen individuell auf den Nutzer 20' abgestimmte Behandlungsregeln für Ereignisse dar. Für den Fall, dass sich (potentiell) anzuwendende Regelfaktoren 23 widersprechen, d.h. ein erster ggf. anzuwendender Regelfaktor indiziert eine erste Behandlung eines Ereignisses, während ein zweiter ebenfalls ggf. anzuwendender Regelfaktor eine zweite (sich von der ersten Behandlung unterscheidende bzw. dieser sogar widersprechende) Behandlung indiziert, wird eine Gewichtung bzw. Priorisierung der anzuwendenden Regelfaktoren vorgenommen, so dass aufgrund der Gewichtung bzw. Priorisierung eine Entscheidung über die anzuwendende Regel bzw. den Regelfaktor herbeigeführt und die Behandlung des Ereignisses durchgeführt werden kann. Die Regelfaktoren (Rules Factors) 23 gliedern sich in zwei verschiedene Gruppen, nämlich einerseits solche, die vom Verhaltensdetektionselement 21 (bzw. BFE) fortlaufend abhängig vom Verhalten des Nutzers 20' angepasst werden, und andererseits solche die als Vetoregeln 235 (Veto Rules Factors) vom Benutzer 20' (bzw. User) eingestellt werden. Diese zuletzt genannten sind wichtig, wenn der Nutzer 20' z.B. alle Anrufe und Nachrichten von einer Person, unabhängig davon, was er gerade macht, sofort und immer angezeigt bzw. akustisch signalisiert bekommen möchte.

Erfindungsgemäß sind Ereignisse beispielsweise Nachrichten wie z.B. Whatsapp-Nachrichten, SMS-Nachrichten (Short Message System), Facebook-Nachrichten, Telefonate, usw., die an das Telekommunikationsendgerät 20 (bzw. das mobile Gerät) gesendet werden und die bei einer herkömmlichen Verarbeitung im Normalfall alle direkt und ohne Beurteilung angezeigt bzw. anderweitig signalisiert werden, d.h. unabhängig davon, ob der Benutzer 20' diese Nachrichten gerade sehen oder hören will bzw. kann.

Ferner ist erfindungsgemäß das Relevanzbestimmungselement 22 vorgesehen, mit dessen Hilfe die Entscheidungen über die Behandlung der Ereignisse getroffen werden und die im Folgenden auch als Relevance Engine bezeichnet wird. das Relevanzbestimmungselement 22 erhält die Ereignisse (bzw. Events) zur Beurteilung und verwendet die Regeln bzw. Regelfaktoren 23 (Rules Factors) um zu entscheiden, ob diese Events dem Benutzer 20' angezeigt werden sollen: direkt oder später, sowie deren Anzeigeart: Vordergrund, Hintergrund, still oder mit Ton, gar nicht oder mit Vibration oder einfach und widerkehrend. Gemäß der vorliegenden Erfindung erfüllt das Relevanzbestimmungselement 22 auch eine zweite Aufgabe: Es erhält (vom Targetingelement 26) Werbenachrichten und App-Angebote zur Beurteilung und entscheidet, ob diese dem Benutzer 20' weitergeleitet werden sollen. Dies erfüllt das Relevanzbestimmungselement 22 analog wie bei den Ereignissen in Abhängigkeit von einer Mehrzahl von Regeln bzw. Regelfaktoren 23.

Erfindungsgemäß finden alle diese Vorgänge innerhalb des Telekommunikationsendgeräts 20, d.h. im Gerät des Benutzers, statt und die Regeln bzw. Regelfaktoren (Rules Factors) werden weder auf Servereinrichtungen eines Anbieters noch auf Servereinrichtungen von Partnern des Anbieters weitergereicht. Dadurch wird erfindungsgemäß ein hohes Maß an Komfort bei der Signalisierung von Nachrichten bzw. Ereignissen erreicht (d.h. sowohl hinsichtlich der Signalisierung von normalerweise vorhandenen bzw. eingehenden Nachrichten (normale Eventanzeige) als auch hinsichtlich von Werbenachrichten bzw. Informationsangeboten. Damit werden insbesondere solche Werbenachrichten bzw. Informationsangebote nicht mehr als Belastung durch den Benutzer 20' gesehen, sondern generieren einen Mehrwert, da sie relevant sind bzw. als relevant angesehen werden, weil sie nur dann gezeigt werden wenn die Wahrscheinlichkeit - aufgrund der Prädiktion der bevorzugten Nutzung des Telekommunikationsendgeräts durch den Nutzer - groß ist, dass dies sinnvoll ist. Erfindungsgemäß ist weiterhin das Targetingelement 26 (Targeting Engine) vorhanden. Dieses Element ist meistens in anderen Anwendungen (Apps) eingebaut, die der Benutzer verwendet, und muss nicht zwingend lokal auf dem Telekommunikationsendgerät 20 ausgeführt werden, beispielsweise im Browser, Location Based Services, etc. Die Targeting Engine 26 kann Informationen abfangen, die der Benutzer 20' explizit freigibt wie beispielsweise den Ort des Telekommunikationsendgeräts 20 oder auch an Stellen, an denen der Benutzer in der Regel keine andere Wahl hat als die Informationen freizugeben, wie beispielsweise beim Surfverhalten, bei Cookies, etc. Erfindungsgemäß verwendet die Targeting Engine 26 dann diese Information, um Angebote und andere Arten von Werbung dem Benutzer 20' anzuzeigen.

Nachfolgend werden verschiedene Anwendungsfälle der vorliegenden Erfindung angegeben:
Auf dem Telekommunikationsendgerät 20 wird eine Anwendung (App) mit der erfindungsgemäßen Funktionalität installiert, wobei die Anwendung den Zugriff auf mindestens einen der folgenden Sensoren des Telekommunikationsendgeräts 20 sowie auf dort gespeicherte Informationen erhält: Den GPS-Sensor bzw. GPS-Empfänger, die Zeit und das Datum, die Kamera, das Mikrofon, den Monitor bzw. die Anzeigeeinrichtung, die Kalendereinträge, das Telefonbuch bzw. die dort gespeicherten Inhalte bzw. Kontakte, das Nutzerverhalten z.B. das Lesen bestimmter Nachrichten. Die die erfindungsgemäße Funktionalität realisierende Anwendung (bzw. App) könnte weiterhin über eine Cloudanbindung oder andere Verbindungsmöglichkeiten Zugriff erhalten auf: die Kalendereinträge in der Cloud und/oder andere Kalender wie Outlook-Kalender oder dergleichen und/oder Email-Postfächer und insbesondere die Email-Kontakte. Die die erfindungsgemäße Funktionalität realisierende Anwendung (bzw. App) verwendet die oben genannten Zugriffe, um vom Benutzer 20' zu lernen oder um die verschiedenen Anwendungen (Apps), die auf dem Telekommunikationsendgerät 20 installiert sind, zu erkennen und daraus Profile und Präferenzen abzuleiten.
Erstes Anwendungsbeispiel:
Der Kunde des Telekommunikationsendgeräts 20 geht ins Sportstudio, um Sport zu treiben;
Die Anwendung erhält die GPS-Signale und ortet das Telekommunikationsendgerät 20; Ein Online-Vergleich (beispielsweise auf Google Maps) zeigt der Anwendung, dass der Benutzer in oder in der Nähe eines Sportstudios ist;
Falls möglich, vergleicht die Anwendung diese Information mit den Kalendereinträge des Benutzers;
Wenn diese übereinstimmen, dann lernt die Anwendung, dass der Benutzer beim Sport treiben ist; die Regeln bzw. Regelfaktoren bzw. Rules werden dementsprechend geändert, um diese Informationen zu berücksichtigen. Optional oder darüber hinaus, könnte die Anwendung für den Standort einen Trainingstag einstellen/speichern, dieser stellt die Regeln jedes Mal automatisch ein und kann von Benutzer unterschiedlich und proprietär angepasst werden; wenn nicht, dann wird einfach "Training" als definiertes Ereignis gespeichert, wenn der Kunde öfters vor Ort ist und kann automatisch angenommen bzw. gelernt werden, dass der Benutzer regelmäßig beim Trainieren ist. Das Relevanzbestimmungselement 22 der Anwendung verwendet bzw. reagiert dynamisch auf die Änderung von Regeln und ändert die entsprechenden Einstellungen des Telekommunikationsendgeräts 20: Das Telekommunikationsendgerät 20 wird automatisch auf z.B. "nicht stören" eingestellt; aus der Kontakt-Liste, den Inhalten von Emails, WhatsApp-Nachrichten und SMS Nachrichten und User Einteilungen lernt die Anwendung die Kontakte und Ereignisse nach Dringlichkeit einzuteilen; abhängig von Dringlichkeit wird die Kontaktaufnahme unterschiedlich behandelt, beispielsweise können Nachrichten von Familienmitgliedern höherer Priorität zugestellt als die Nachrichten von Kollegen; hierbei kann es vorgesehen sein, dass "zweite Anrufe" (d.h. Anrufe seitens der gleichen Person oder Telefonnummer, die innerhalb eines bestimmten Zeitraums erneut erfolgen) oder solche Anrufe die einen dringlichen Kontext vermuten lassen (wie zum Beispiel "Verletzt") werden sofort an den Benutzer weitergeleitet bzw. diesem signalisiert; Nicht dringliche Nachrichten, wie z.B. Kontaktaufnahmen, werden zurückgestellt und erst nach dem Verlassen des Sportstudios oder nach dem Ablauf einer vorgegebenen Zeit angezeigt;
Obwohl der Benutzer zeitlich vor dem Eintreffen des Benutzers beim Sportstudio Autos auf dem Browser des Telekommunikationsendgeräts 20 gesucht hat und in der Folge das Targetingelement 26 Werbung über Autos an das Telekommunikationsendgerät 20 schicken will, wird diese im Kontext "Training" vom Relevanzbestimmungselement 22 nicht zugestellt.
Weitere (optionale) erfindungsgemäße Möglichkeiten umfassen beispielsweise die Situation, dass ein Familienangehöriger (beispielsweise der Partner oder die Partnerin) eine Nachricht erhält, wenn der Benutzer des Telekommunikationsendgerät 20 beim Sport ist. Eine solche Nachricht hat beispielsweise zum Inhalt, dass der Benutzer des Telekommunikationsendgeräts 20 beim Sport ist, jedoch ist erfindungsgemäß beispielsweise vorgesehen, dass lediglich der Familienangehörige (beispielsweise der Partner oder die Partnerin) eine solche Nachricht erhält, nicht jedoch eine andere Person, wie beispielsweise ein Arbeitskollegen, weil eine andere Person die Information, ob der Benutzer des Telekommunikationsendgerät beispielsweise beim Sport ist, nicht interessieren sollte.
Erfindungsgemäß ist es vorgesehen, dass die Anwendung (App), die die erfindungsgemäße Funktionalität realisiert, auch erkennt, dass der Benutzer des Telekommunikationsendgeräts gerade in einer beruflichen Situation (d.h. beim Arbeiten) ist. Dies wird beispielsweise dadurch erkannt, dass der Benutzer gerade etwas im beruflichen Kontext am Telekommunikationsendgerät unternimmt. Die Erfindung sorgt dafür, dass keine unnötigen Notifikationen bzw. Nachrichten angezeigt bzw. signalisiert werden, erlaubt es jedoch dringenden Nachrichten doch bis zum Benutzer durchzukommen, d.h. auf dem Telekommunikationsendgerät signalisiert zu werden.

## Patentansprüche

1. Verfahren zur individuellen Prädiktion der Nutzung und/oder der individuellen Anpassung der Nutzung eines zur Bedienung durch einen Benutzer vorgesehenen personalisierten Telekommunikationsendgeräts (20), wobei das Telekommunikationsendgerät (20) eine Benutzerschnittstelle aufweist, wobei das Telekommunikationsendgerät (20) ein Verhaltensdetektionselement (21) aufweist, wobei mittels des Verhaltensdetektionselements (21) zum einen mittels der Benutzerschnittstelle vorgenommene Benutzungshandlungen des Benutzers und zum anderen Kontextinformationen des Telekommunikationsendgeräts (20) detektiert werden, wobei das Telekommunikationsendgerät (20) ferner ein Relevanzbestimmungselement (22) und eine Mehrzahl von Regelfaktoren (23) aufweist, wobei eine Mehrzahl an Ereignissen betrachtet wird, wobei - im Fall des Eintretens, zu einem bestimmten Zeitpunkt, eines bestimmten Ereignisses aus der Mehrzahl an Ereignissen - durch das Relevanzbestimmungselement (22) wenigstens ein bestimmter Regelfaktor aus der Mehrzahl von Regelfaktoren (23) ausgewählt wird, so dass der bestimmte Regelfaktor auf das bestimmte Ereignis angewandt wird, wobei das Verfahren die folgenden Schritte umfasst:
-- in einem ersten Verfahrensschritt wird für ein vorgegebenes Zeitintervall einerseits das Verhalten des Benutzers hinsichtlich der mittels der Benutzerschnittstelle vorgenommenen Benutzungshandlungen und andererseits Kontextinformationen des Telekommunikationsendgeräts (20) detektiert,
**gekennzeichnet durch**
-- in einem zweiten Verfahrensschritt, zeitlich nach oder während des ersten Verfahrensschritts, wird angesichts des Eintretens eines ersten Ereignisses aus der Mehrzahl von Ereignissen wenigstens ein generierter oder geänderter Regelfaktor in Abhängigkeit des Verhaltens des Benutzers hinsichtlich der mittels der Benutzerschnittstelle vorgenommenen Benutzungshandlungen und/oder in Abhängigkeit der Kontextinformationen des Telekommunikationsendgeräts (20) generiert oder geändert,
-- in einem dritten Verfahrensschritt, zeitlich nach dem zweiten Verfahrensschritt, wird der generierte oder geänderte Regelfaktor im Fall des Eintretens des ersten Ereignisses und/oder im Fall des Eintretens eines zweiten Ereignisses aus der Mehrzahl von Ereignissen in Abhängigkeit der Kontextinformationen des Telekommunikationsendgeräts (20) angewandt.

2. Verfahren nach Anspruch 1, **dadurch gekennzeichnet, dass** das Verhaltensdetektionselement (21) erste Konfigurationsdaten aufweist, dass das Relevanzbestimmungselement (22) zweite Konfigurationsdaten aufweist und dass die Mehrzahl von Regelfaktoren (23) dritte Konfigurationsdaten aufweisen, wobei die ersten, zweiten und dritten Konfigurationsdaten im Telekommunikationsendgerät (20) gespeichert werden.

3. Verfahren nach einem der vorhergehenden Ansprüchen, **dadurch gekennzeichnet, dass** das Telekommunikationsendgerät (20) wenigstens einen Signalgeber aufweist, wobei sich aus der Anwendung der verschiedenen Regelfaktoren aus der Mehrzahl von Regelfaktoren (23)
-- die Aktivierung und/oder zeitweise Aktivierung und/oder
-- die Teilaktivierung und/oder zeitweise Teilaktivierung und/oder
-- die Deaktivierung und/oder zeitweise Deaktivierung
des wenigstens einen Signalgebers ergibt.

4. Verfahren nach einem der vorhergehenden Ansprüchen, **dadurch gekennzeichnet, dass** eine Mehrzahl von Betriebszuständen des Telekommunikationsendgeräts (20) aufgrund der Detektion, mittels des Verhaltensdetektionselements (21), von mittels der Benutzerschnittstelle vorgenommener Benutzungshandlungen des Benutzers sowie von Kontextinformationen des Telekommunikationsendgeräts (20) detektiert werden.

5. Verfahren nach einem der vorhergehenden Ansprüchen, **dadurch gekennzeichnet, dass** das Telekommunikationsendgerät (20) eine Mehrzahl an Sensoren aufweist, wobei die Kontextinformationen mittels der Mehrzahl an Sensoren erfasst werden.

6. Verfahren nach einem der vorhergehenden Ansprüchen, **dadurch gekennzeichnet, dass** die Mehrzahl von Regelfaktoren (23) eine erste Teilmenge an Regelfaktoren und eine zweite Teilmenge an Regelfaktoren aufweist, wobei die erste Teilmenge an Regelfaktoren automatisch generierte oder geänderte Regelfaktoren umfasst und wobei die zweite Teilmenge an Regelfaktoren durch den Benutzer des Telekommunikationsendgeräts (20) definierte Regelfaktoren umfasst.

7. Verfahren nach einem der vorhergehenden Ansprüchen, **dadurch gekennzeichnet, dass** die Mehrzahl an Ereignissen eine erste Teilmenge an Ereignissen und eine zweite Teilmenge an Ereignissen aufweist, wobei die ersten Teilmenge an Ereignissen für den Benutzer des Telekommunikationsendgeräts (20) eingehende Nachrichten umfasst und wobei die zweite Teilmenge an Ereignissen Werbenachrichten und/oder Informationsangebote umfasst.

8. Telekommunikationsendgerät (20) zur individuellen Prädiktion der Nutzung und/oder der individuellen Anpassung der Nutzung durch einen Benutzer, wobei das Telekommunikationsendgerät (20) eine Benutzerschnittstelle aufweist, wobei das Telekommunikationsendgerät (20) ein Verhaltensdetektionselement (21) aufweist, wobei das Telekommunikationsendgerät (20) konfiguriert ist, mittels des Verhaltensdetektionselements (21) zum einen mittels der Benutzerschnittstelle vorgenommene Benutzungshandlungen des Benutzers und zum anderen Kontextinformationen des Telekommunikationsendgeräts (20) zu detektierten, wobei das Telekommunikationsendgerät (20) ferner ein Relevanzbestimmungselement (22) und eine Mehrzahl von Regelfaktoren (23) aufweist, wobei das Telekommunikationsendgerät (20) konfiguriert ist, eine Mehrzahl an Ereignissen zu betrachten, wobei das Telekommunikationsendgerät (20) ferner konfiguriert ist,- im Fall des Eintretens, zu einem bestimmten Zeitpunkt, eines bestimmten Ereignisses aus der Mehrzahl an Ereignissen - durch das Relevanzbestimmungselement (22) wenigstens einen bestimmten Regelfaktor aus der Mehrzahl von Regelfaktoren (23) auszuwählen, so dass der bestimmte Regelfaktor auf das bestimmte Ereignis angewandt wird, wobei das Telekommunikationsendgerät (20) konfiguriert ist:
-- für ein vorgegebenes Zeitintervall einerseits das Verhalten des Benutzers hinsichtlich der mittels der Benutzerschnittstelle vorgenommenen Benutzungshandlungen und andererseits Kontextinformationen des Telekommunikationsendgeräts (20) zu delektieren.
**dadurch gekennzeichnet, dass** Telekommunikationsendgerät (20) konfiguriert ist
-- angesichts des Eintretens eines ersten Ereignisses aus der Mehrzahl von Ereignissen wenigstens einen generierten oder geänderten Regelfaktor in Abhängigkeit des Verhaltens des Benutzers hinsichtlich der mittels der Benutzerschnittstelle vorgenommenen Benutzungshandlungen und/oder in Abhängigkeit der Kontextinformationen des Telekommunikationsendgeräts (20) zu generieren oder zu ändern und
-- den generierten oder geänderten Regelfaktor im Fall des Eintretens des ersten Ereignisses und/oder im Fall des Eintretens eines zweiten Ereignisses aus der Mehrzahl von Ereignissen in Abhängigkeit der Kontextinformationen des Telekommunikationsendgeräts (20) anzuwenden.

9. Telekommunikationsendgerät (20) nach Anspruch 8, **dadurch gekennzeichnet, dass** das Verhaltensdetektionselement (21) erste Konfigurationsdaten aufweist, dass das Relevanzbestimmungselement (22) zweite Konfigurationsdaten aufweist und dass die Mehrzahl von Regelfaktoren (23) dritte Konfigurationsdaten aufweisen, wobei die ersten, zweiten und dritten Konfigurationsdaten im Telekommunikationsendgerät (20) gespeichert sind.

10. Telekommunikationsendgerät (20) nach Anspruch 8 oder 9, **dadurch gekennzeichnet, dass** das Telekommunikationsendgerät (20) wenigstens einen Signalgeber aufweist, wobei sich aus der Anwendung der verschiedenen Regelfaktoren aus der Mehrzahl von Regelfaktoren (23)
-- die Aktivierung und/oder zeitweise Aktivierung und/oder
-- die Teilaktivierung und/oder zeitweise Teilaktivierung und/oder
-- die Deaktivierung und/oder zeitweise Deaktivierung
des wenigstens einen Signalgebers ergibt.

11. Telekommunikationsendgerät (20) nach einem der Ansprüche 8, 9 oder 10, **dadurch gekennzeichnet, dass** das Telekommunikationsendgerät (20) eine Mehrzahl von Betriebszuständen des Telekommunikationsendgeräts (20) aufweist, wobei das Telekommunikationsendgerät (20) konfiguriert ist, die Mehrzahl von Betriebszuständen aufgrund der Detektion, mittels des Verhaltensdetektionselements (21), von mittels der Benutzerschnittstelle vorgenommener Benutzungshandlungen des Benutzers sowie von Kontextinformationen des Telekommunikationsendgeräts (20) zu detektieren.

12. Telekommunikationsendgerät (20) nach einem der Ansprüche 8, 9, 10 oder 11, **dadurch gekennzeichnet, dass** das Telekommunikationsendgerät (20) eine Mehrzahl an Sensoren aufweist, wobei das Telekommunikationsendgerät (20) konfiguriert ist, die Kontextinformationen mittels der Mehrzahl an Sensoren zu erfassen.

13. Computerprogramm mit Programmcodemitteln, mit deren Hilfe die Schritte eines Verfahrens nach einem der Ansprüche 1 bis 7 durchführbar sind, wenn das Computerprogramm auf einem programmierbaren Telekommunikationsendgerät (20) ausgeführt wird.

14. Computerprogrammprodukt mit einem computerlesbaren Medium und einem auf dem computerlesbaren Medium gespeicherten Computerprogramm mit Programmcodemitteln, die dazu geeignet sind, dass die Schritte eines Verfahrens nach einem der Ansprüche 1 bis 7 durchführbar sind, wenn das Computerprogramm auf einem programmierbaren Telekommunikationsendgerät (20) ausgeführt wird.

## Claims

1. Method for individually predicting the use and/or individually adapting the use of a personalised telecommunications terminal (20) provided for operation by a user, wherein the telecommunications terminal (20) has a user interface, wherein the telecommunications terminal (20) has a behaviour detection element (21), wherein the behaviour detection element (21) detects on the one hand use actions of the user performed by means of the user interface and on the other hand context information of the telecommunications terminal (20), wherein the telecommunications terminal (20) further has a relevance determining element (22) and a plurality of rule factors (23), wherein a plurality of events are considered, wherein
- in the case of the occurrence, at a particular time, of a particular event from the plurality of events - at least one particular rule factor from the plurality of rule factors (23) is selected by the relevance determining element (22) so that the particular rule factor is applied to the particular event, wherein the method comprises the following steps:
- in a first method step, detecting for a predetermined time interval on the one hand the behaviour of the user with respect to the use actions performed by means of the user interface and on the other hand context information of the telecommunications terminal (20),
**characterised by**
- in a second method step, chronologically after or during the first method step, in view of the occurrence of a first event from the plurality of events, generating or changing at least one generated or changed rule factor in dependence upon the behaviour of the user with respect to the use actions performed by means of the user interface and/or in dependence upon the context information of the telecommunications terminal (20),
- in a third method step, chronologically after the second method step, applying the generated or changed rule factor in the case of the occurrence of the first event and/or in the case of the occurrence of a second event from the plurality of events in dependence upon the context information of the telecommunications terminal (20).

2. Method as claimed in claim 1, **characterised in that** the behaviour detection element (21) comprises first configuration data, **in that** the relevance determining element (22) comprises second configuration data, and **in that** the plurality of rule factors (23) comprise third configuration data, wherein the first, second and third configuration data are stored in the telecommunications terminal (20).

3. Method as claimed in any one of the preceding claims, **characterised in that** the telecommunications terminal (20) has at least one signal transmitter, wherein applying the different rule factors from the plurality of rule factors (23) causes
- the activation and/or temporary activation and/or
- the partial activation and/or temporary partial activation and/or
- the deactivation and/or partial deactivation
of the at least one signal transmitter.

4. Method as claimed in any one of the preceding claims, **characterised in that** a plurality of operating states of the telecommunications terminal (20) are detected owing to the detection, by means of the behaviour detection element (21), of use actions of the user performed by means of the user interface and of context information of the telecommunications terminal (20).

5. Method as claimed in any one of the preceding claims, **characterised in that** the telecommunications terminal (20) has a plurality of sensors, wherein the context information is detected by means of the plurality of sensors.

6. Method as claimed in any one of the preceding claims, **characterised in that** the plurality of rule factors (23) comprises a first subset of rule factors and a second subset of rule factors, wherein the first subset of rule factors includes automatically generated or changed rule factors, and wherein the second subset of rule factors includes rule factors defined by the user of the telecommunications terminal (20).

7. Method as claimed in any one of the preceding claims, **characterised in that** the plurality of events comprises a first subset of events and a second subset of events, wherein the first subset of events includes incoming messages for the user of the telecommunications terminal (20), and wherein the second subset of events includes advertising messages and/or offers of information.

8. Telecommunications terminal (20) for individually predicting the use and/or individually adapting the use by a user, wherein the telecommunications terminal (20) has a user interface, wherein the telecommunications terminal (20) has a behaviour detection element (21), wherein the telecommunications terminal (20) is configured to detect, by means of the behaviour detection element (21), on the one hand use actions of the user performed by means of the user interface and on the other hand context information of the telecommunications terminal (20), wherein the telecommunications terminal (20) further has a relevance determining element (22) and a plurality of rule factors (23), wherein the telecommunications terminal (20) is configured to consider a plurality of events, wherein the telecommunications terminal (20) is further configured to select - in the case of the occurrence, at a particular time, of a particular event from the plurality of events - at least one particular rule factor from the plurality of rule factors (23) by the relevance determining element (22) so that the particular rule factor is applied to the particular event, wherein the telecommunications terminal (20) is configured to:
- detect for a predetermined time interval on the one hand the behaviour of the user with respect to the use actions performed by means of the user interface and on the other hand context information of the telecommunications terminal (20),
**characterised in that** the telecommunications terminal (20) is configured to:
- in view of the occurrence of a first event from the plurality of events, generate or change at least one generated or changed rule factor in dependence upon the behaviour of the user with respect to the use actions performed by means of the user interface and/or in dependence upon the context information of the telecommunications terminal (20), and
- apply the generated or changed rule factor in the case of the occurrence of the first event and/or in the case of the occurrence of a second event from the plurality of events in dependence upon the context information of the telecommunications terminal (20).

9. Telecommunications terminal (20) as claimed in claim 8, **characterised in that** the behaviour detection element (21) comprises first configuration data, **in that** the relevance determining element (22) comprises second configuration data, and **in that** the plurality of rule factors (23) comprise third configuration data, wherein the first, second and third configuration data are stored in the telecommunications terminal (20).

10. Telecommunications terminal (20) as claimed in claim 8 or 9, **characterised in that** the telecommunications terminal (20) has at least one signal transmitter, wherein applying the different rule factors from the plurality of rule factors (23) causes
- the activation and/or temporary activation and/or
- the partial activation and/or temporary partial activation and/or
- the deactivation and/or partial deactivation of the at least one signal transmitter.

11. Telecommunications terminal (20) as claimed in any one of claims 8, 9 or 10, **characterised in that** the telecommunications terminal (20) has a plurality of operating states of the telecommunications terminal (20), wherein the telecommunications terminal (20) is configured to detect the plurality of operating states owing to the detection, by means of the behaviour detection element (21), of use actions of the user performed by means of the user interface and of context information of the telecommunications terminal (20).

12. Telecommunications terminal (20) as claimed in any one of claims 8, 9, 10 or 11, **characterised in that** the telecommunications terminal (20) has a plurality of sensors, wherein the telecommunications terminal (20) is configured to detect the context information by means of the plurality of sensors.

13. Computer program having program code means, by means of which the steps of a method as claimed in any one of claims 1 to 7 can be performed when the computer program is executed on a programmable telecommunications terminal (20).

14. Computer program product having a computer-readable medium and a computer program, stored on the computer-readable medium, having program code means which are suitable to be able to perform the steps of a method as claimed in any one of claims 1 to 7 when the computer program is executed on a programmable telecommunications terminal (20).

## Revendications

1. Procédé destiné à la prédiction individuelle de l'utilisation et/ou de l'adaptation individuelle de l'utilisation d'un terminal de télécommunication (20) personnalisé prévu pour être utilisé par un utilisateur, le terminal de télécommunication (20) comportant une interface utilisateur, le terminal de télécommunication (20) comportant un élément de détection du comportement (21), des actions d'utilisation de l'utilisateur effectuées au moyen de l'interface utilisateur d'une part et des informations de contexte du terminal de télécommunication (20) d'autre part étant détectées au moyen de l'élément de détection du comportement (21), le terminal de télécommunication (20) comportant en outre un élément de détermination de l'importance (22) et une pluralité de facteurs de règle (23), une pluralité d'événements étant observée, dans lequel
- en cas de survenance, à un moment précis, d'un événement précis parmi la pluralité d'événements - au moins un facteur de règle précis est sélectionné parmi la pluralité de facteurs de règle (23) par l'élément de détermination de l'importance (22), de telle sorte que le facteur de règle précis est appliqué à l'événement précis, le procédé comprenant les étapes suivantes :
- dans une première étape de procédé, le comportement de l'utilisateur en ce qui concerne les actions d'utilisation effectuées au moyen de l'interface utilisateur d'une part et des informations de contexte du terminal de télécommunication (20) d'autre part sont détectés pour un intervalle de temps prédéfini,
**caractérisé en ce que**
- dans une deuxième étape de procédé, chronologiquement après ou pendant la première étape de procédé, compte tenu de la survenance d'un premier événement parmi la pluralité d'événements, au moins un facteur de règle généré ou modifié est généré ou modifié en fonction du comportement de l'utilisateur en ce qui concerne les actions d'utilisation effectuées au moyen de l'interface utilisateur et/ou en fonction des informations de contexte du terminal de télécommunication (20),
- dans une troisième étape de procédé, chronologiquement après la deuxième étape de procédé, en cas de survenance du premier événement et/ou en cas de survenance d'un second événement parmi la pluralité d'événements, le facteur de règle généré ou modifié est appliqué en fonction des informations de contexte du terminal de télécommunication (20).

2. Procédé selon la revendication 1, **caractérisé en ce que** l'élément de détection du comportement (21) comporte des premières données de configuration, **en ce que** l'élément de détermination de l'importance (22) comporte des deuxièmes données de configuration et **en ce que** la pluralité de facteurs de règle (23) comporte des troisièmes données de configuration, les premières, deuxièmes et troisièmes données de configuration étant enregistrées dans le terminal de télécommunication (20).

3. Procédé selon l'une des revendications précédentes, **caractérisé en ce que** le terminal de télécommunication (20) comporte au moins un générateur de signaux, dans lequel
- l'activation et/ou l'activation temporaire et/ou
- l'activation partielle et/ou l'activation partielle temporaire et/ou
- la désactivation et/ou la désactivation temporaire de l'au moins un générateur de signaux résulte de l'application des différents facteurs de règle parmi la pluralité de facteurs de règle (23).

4. Procédé selon l'une des revendications précédentes, **caractérisé en ce qu'**une pluralité d'états de fonctionnement du terminal de télécommunication (20) sont détectés en raison de la détection, au moyen de l'élément de détection du comportement (21), d'actions d'utilisation de l'utilisateur effectuées au moyen de l'interface utilisateur ainsi que d'informations de contexte du terminal de télécommunication (20).

5. Procédé selon l'une des revendications précédentes, **caractérisé en ce que** le terminal de télécommunication (20) comporte une pluralité de capteurs, les informations de contexte étant acquises au moyen de la pluralité de capteurs.

6. Procédé selon l'une des revendications précédentes, **caractérisé en ce que** la pluralité de facteurs de règle (23) comporte un premier sous-ensemble de facteurs de règle et un second sous-ensemble de facteurs de règle, le premier sous-ensemble de facteurs de règle comprenant des facteurs de règle générés ou modifiés automatiquement et le second sous-ensemble de facteurs de règle comprenant des facteurs de règle définis par l'utilisateur du terminal de télécommunication (20).

7. Procédé selon l'une des revendications précédentes, **caractérisé en ce que** la pluralité d'événements comporte un premier sous-ensemble d'événements et un second sous-ensemble d'événements, le premier sous-ensemble d'événements comprenant des messages entrants pour l'utilisateur du terminal de télécommunication (20) et le second sous-ensemble d'événements comprenant des messages publicitaires et/ou des offres d'informations.

8. Terminal de télécommunication (20) destiné à la prédiction individuelle de l'utilisation et/ou de l'adaptation individuelle de l'utilisation par un utilisateur, le terminal de télécommunication (20) comportant une interface utilisateur, le terminal de télécommunication (20) comportant un élément de détection du comportement (21), le terminal de télécommunication (20) étant configuré pour détecter, au moyen de l'élément de détection du comportement (21), des actions d'utilisation de l'utilisateur effectuées au moyen de l'interface utilisateur d'une part et des informations de contexte du terminal de télécommunication (20) d'autre part, le terminal de télécommunication (20) comportant en outre un élément de détermination de l'importance (22) et une pluralité de facteurs de règle (23), le terminal de télécommunication (20) étant configuré pour observer une pluralité d'événements, le terminal de télécommunication (20) étant en outre configuré pour - en cas de survenance, à un moment précis, d'un événement précis parmi la pluralité d'événements - sélectionner au moins un facteur de règle précis parmi la pluralité de facteurs de règle (23) au moyen de l'élément de détermination de l'importance (22), de telle sorte que le facteur de règle précis est appliqué à l'événement précis, le terminal de télécommunication (20) étant configuré pour :
- détecter, pour un intervalle de temps prédéfini, le comportement de l'utilisateur en ce qui concerne les actions d'utilisation effectuées au moyen de l'interface utilisateur d'une part et des informations de contexte du terminal de télécommunication (20) d'autre part,
**caractérisé en ce que** le terminal de télécommunication (20) est configuré pour
- compte tenu de la survenance d'un premier événement parmi la pluralité d'événements, générer ou modifier au moins un facteur de règle généré ou modifié en fonction du comportement de l'utilisateur en ce qui concerne les actions d'utilisation effectuées au moyen de l'interface utilisateur et/ou en fonction des informations de contexte du terminal de télécommunication (20) et
- appliquer le facteur de règle généré ou modifié, en cas de survenance du premier événement et/ou en cas de survenance d'un second événement parmi la pluralité d'événements, en fonction des informations de contexte du terminal de télécommunication (20).

9. Terminal de télécommunication (20) selon la revendication 8, **caractérisé en ce que** l'élément de détection du comportement (21) comporte des premières données de configuration, **en ce que** l'élément de détermination de l'importance (22) comporte des deuxièmes données de configuration et **en ce que** la pluralité de facteurs de règle (23) comporte des troisièmes données de configuration, les premières, deuxièmes et troisièmes données de configuration étant enregistrées dans le terminal de télécommunication (20).

10. Terminal de télécommunication (20) selon la revendication 8 ou 9, **caractérisé en ce que** le terminal de télécommunication (20) comporte au moins un générateur de signaux, dans lequel
- l'activation et/ou l'activation temporaire et/ou
- l'activation partielle et/ou l'activation partielle temporaire et/ou
- la désactivation et/ou la désactivation temporaire de l'au moins un générateur de signaux résulte de l'application des différents facteurs de règle parmi la pluralité de facteurs de règle (23).

11. Terminal de télécommunication (20) selon l'une des revendications 8, 9 ou 10, **caractérisé en ce que** le terminal de télécommunication (20) comporte une pluralité d'états de fonctionnement du terminal de télécommunication (20), le terminal de télécommunication (20) étant configuré pour détecter la pluralité d'états de fonctionnement en raison de la détection, au moyen de l'élément de détection du comportement (21), d'actions d'utilisation de l'utilisateur effectuées au moyen de l'interface utilisateur ainsi que d'informations de contexte du terminal de télécommunication (20) .

12. Terminal de télécommunication (20) selon l'une des revendications 8, 9, 10 ou 11, **caractérisé en ce que** le terminal de télécommunication (20) comporte une pluralité de capteurs, le terminal de télécommunication (20) étant configuré pour acquérir les informations de contexte au moyen de la pluralité de capteurs.

13. Programme informatique comprenant des moyens de code de programme, à l'aide desquels les étapes d'un procédé selon l'une des revendications 1 à 7 peuvent être effectuées quand le programme informatique est exécuté sur un terminal de télécommunication (20) programmable.

14. Produit-programme informatique comprenant un support lisible par ordinateur et un programme informatique enregistré sur le support lisible par ordinateur comprenant des moyens de code de programme, qui sont adaptés pour que les étapes d'un procédé selon l'une des revendications 1 à 7 puissent être effectuées quand le programme informatique est exécuté sur un terminal de télécommunication (20) programmable.
